Europäisches Patentamt

(19) European Patent Office    (11) Publication number: **0 213 445**
Office européen des brevets                                    **B1**

(12)                    **EUROPEAN PATENT SPECIFICATION**

(45) Date of publication of the patent specification:     (51) Int. Cl.⁴: **F02F 1/38**
20.12.89

(21) Application number: **86110865.2**

(22) Date of filing: **06.08.86**

(54) Cylinder head for a direct injection diesel engine.

(30) Priority: **06.09.85 IT 6776085**

(73) Proprietor: **IVECO FIAT S.p.A., Via Puglia 35, I-10156 Torino(IT)**

(43) Date of publication of application:
**11.03.87 Bulletin 87/11**

(72) Inventor: **Liviantoni, Orfeo, Via Vandalino, 1, I-10100 Torino(IT)**
Inventor: **Tardi', Riccardo, Via Breglio, 87, I-10100 Torino(IT)**

(45) Publication of the grant of the patent:
**20.12.89 Bulletin 89/51**

(74) Representative: **Boggio, Luigi et al, STUDIO TORTA Società Semplice Via Viotti, 9, I-10121 Torino(IT)**

(84) Designated Contracting States:
**DE FR GB**

(56) References cited:
**DE-A- 3 327 810**
**DE-B- 1 014 790**
**GB-A- 967 697**
**NL-C- 90 985**
**US-A- 3 352 293**
**US-A- 3 468 295**
**US-A- 3 477 417**

ACTORUM AG

## Description

This invention relates to a direct injection diesel engine cylinder head in which intake and exhaust valves are mobile with there axes parallel to the cylinder axes, and which houses the fuel injectors. The aforesaid cylinder head is normally provided in known manner with a flat surface arranged to rest on a corresponding surface of the engine crankcase on which said cylinder head is fixed, circular intake ports and circular exhaust ports being provided in said surface of the cylinder head and controlled by the relative valves. In said surface there are also provided bores through which the injector nozzles project, each of which forms a certain angle with the axis of the relative cylinder.

The valves are normally operated by cams rigid with a camshaft, the axis of which is substantially parallel to the plane containing the axes of the relative cylinders, the circular intake and exhaust ports controlled by said valves thus being disposed to one side of said plane.

A cylinder head of this type is described in DE-B 1 014 790. In the GB-A 967 697 there is described a head for an internal combustion engine in which the engine inlet valves are operated directly and the engine exhaust valves are operated indirectly through a rockerlever by a single camshaft; in this head the axes of the valves are not parallel to the plane containing the cylinder axes.

Cylinder heads of the aforesaid type have certain drawbacks.

In this respect, the thermodynamic and volumetric efficiencies of engines provided with cylinder heads of the described type are not very high. The thermodynamic efficiency is considerably influenced by the manner in which combustion takes place inside the cylinder, and this itself depends on the symmetry of the jets of fuel which are injected into the cylinder by the injector. The nozzle provided at the end of this latter (and which emerges through the said bore in the cylinder head) is known to comprise a plurality of small holes suitably orientated to provide good injection symmetry, but this favourable condition is difficult to attain both because of the normally considerable inclination of the axis of each injector to the axis of the relative cylinder, and because of the eccentricity of said nozzle to this axis. Such a configuration (with the injector axis inclined to the cylinder axis, and with the nozzle somewhat eccentric to said axis) derives from the fact that the intake and exhaust values, together with the devices with which they are normally equipped, are rather bulky and therefore occupy a zone in the cylinder head which is to one side of the plane containing the cylinder axes, and actually interferes with the plane. In this respect, the exhaust valves are normally fitted with tappets for automatic take-up of the slack between the cam and valve stem, these tappets being of rather large outer diameter, and the circular intake and exhaust ports for the valves are also of rather large diameter. The result is that in cylinder heads of the described type, if the plane containing the cylinder axes also contains the drive shaft axis, each injector must always be inclined to the cylinder axis by a rather large angle, greater than 25°, and the relative nozzle is always eccentric to the cylinder axis, being offset therefrom by a distance normally greater than one tenth of the cylinder diameter. Under these conditions, in order to obtain fuel jet symmetry within the combustion chamber throughout a section taken on a plane orthogonal to the plane containing the cylinder axes and passing through the combustion chamber axis, some of the axes of the injection holes provided in the nozzle of each injector must necessarily form a very large angle to the axis of the relative injector, and are therefore because of their position relative to the injector pin unable to generate jets of sufficient strength to provide good mixing with the feed air. In engines provided with cylinder heads of the described type, the volumetric efficiency is very low because, in order to reduce the aforesaid eccentricity to acceptable limits which still give reasonable injection symmetry, the diameters of the intake and exhaust ports are rather small. It is well known that this geometrical condition does not enable high volumetric efficiencies to be obtained, these depending on the cylinder air feed and exhaust gas throughputs. On the other hand, in modern high-speed diesel engines, the tendency is towards very high volumetric efficiency.

The object of the present invention is to provide a cylinder head for a direct injection diesel engine, by means of which the aforesaid drawbacks can be eliminated and which is therefore suitable for the construction of an engine with high thermodynamic and volumetric efficiency.

This object is attained according to the present invention by a direct injection diesel engine cylinder head in which intake valves and exhaust valves are mobile with their axes parallel to the cylinder axes and which houses the fuel injectors, the axes of said cylinders being disposed in the plane containing the drive shaft axis, and said cylinder head being provided with a surface arranged to rest on a corresponding surface of the engine crankcase on which said cylinder head is fixed, in said surface of the cylinder head there being provided circular intake ports and circular exhaust ports controlled by the relative valves, and there being also provided holes through which the nozzles of said injectors project, each plane in which the axes of the intake valve and exhaust valve of each cylinder lie forming an angle of between 0° and 90° with the plane containing the cylinder axes, and each nozzle of said injectors opening substantially in correspondence with the axis of the relative cylinder, the axis of each injector forming an angle of less than 25° with said axis of the relative cylinder, characterised in that said valves are controlled by a single camshaft the axis of which is parallel to said plane containing the cylinder axes, and the exhaust and intake valves of each cylinder are controlled the former directly by means of a tappet disposed between the exhaust valve and the relative cam rigid with said shaft and arranged to take-up the slack between the valve and cam and the latter by means of a rocker lever operated by a cain rigid with said shaft.

The present invention will be more apparent from the detailed description given hereinafter by way of example, with reference to the accompanying drawings in which:

Figure 1 is a vertical section through the cylinder head of the invention taken on two different vertical planes;

Figure 2 shows a further vertical section through the cylinder head of the invention on a different vertical plane;

Figure 3 is a diagrammatic plan view of the basic geometrical elements for defining the positions and dimensions of a pair of circular intake and exhaust ports, the relative injection nozzle and the cylinder to which said valves and nozzle relate.

The engine on which the cylinder head of the invention is mounted is a direct injection diesel engine, comprising substantially a crankcase 1 in which a plurality of cylindrical seats 2 are provided for corresponding cylinders, inside which there move pistons 3 each of which is provided with a cavity 4 suitably shaped to form a corresponding chamber into which the fuel is injected in the manner described hereinafter.

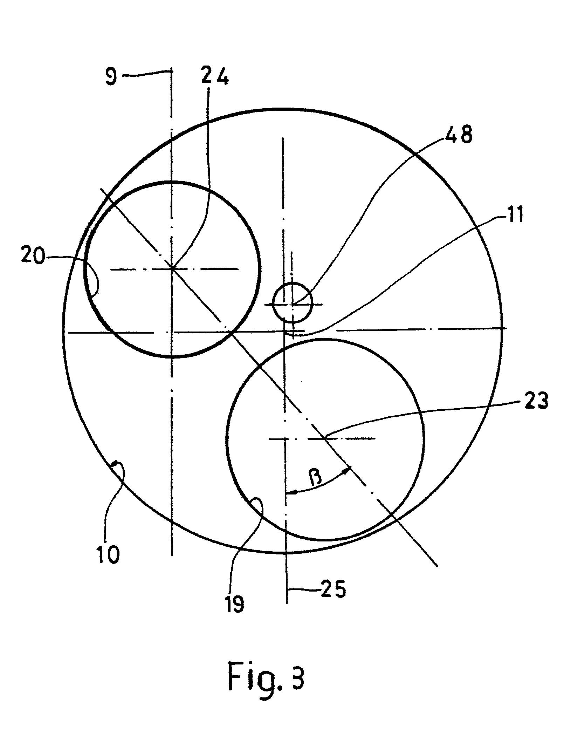

The cylinder head of the invention, indicated overall by 5, comprises substantially a body 6 containing the seats for the various members and devices mounted on the head, and the ducts with which the head is provided. The upper part of the head contains the bearings for a camshaft 7 provided with cams 8 which, in the manner stated hereinafter, control the intake and exhaust valves with which the head is provided. The axis of said shaft is disposed substantially parallel to the plane containing the axes of the various engine cylinders. This axis, in the diagrammatic representation of Figure 3 which includes the basic geometrical elements of each cylinder, is indicated by the reference numeral 9, the cylindrical surface 2 of the cylinder is indicated by 10, and the centre of the cylinder is indicated by 11. This shaft is conveniently supported by sliding bearings, of which one part is formed in the body 6 of the cylinder head and the other part is formed in a cover 13 fixed to the cylinder head. The plane of contact between the body 6 and cover 13, indicated by 14, conveniently forms an angle α of less than 90° with said plane containing the cylinder axis, but can also form an angle other than that indicated, and in particular an angle of 90°.

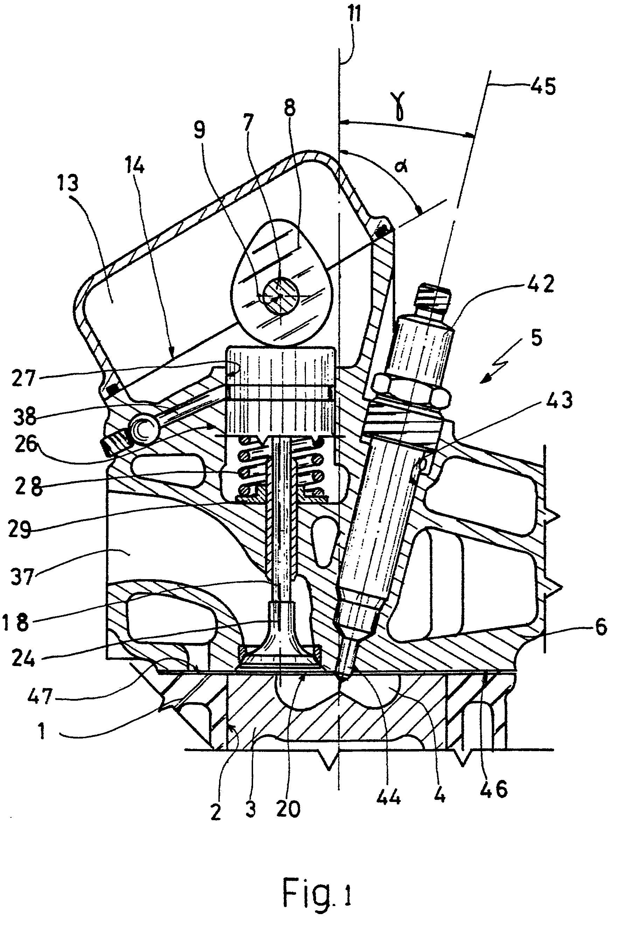

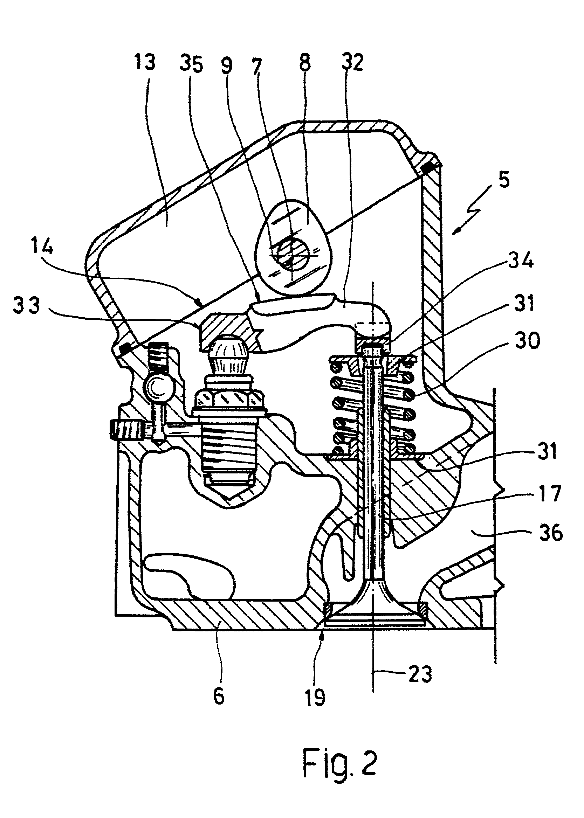

An intake valve 17 and an exhaust valve 18, visible in the sectional views of Figure 2 and Figure 1 respectively, are mobile in the body 6 in correspondence with the cylinder, and control a corresponding circular intake port 19 and a corresponding circular exhaust port 2 the outlines of which are indicated by the same reference numeral in the diagrammatic representation of Figure 3. This same representation also shows the axes 23 and 24 of the said valves. According to the invention, the plane in which the axes 23 and 24 of the intake valve and exhaust valve of each cylinder lie forms an angle, indicated by β in Figure 3, of between 0° and 90° with the plane containing the cylinder axes. In Figure 3, the straight line representing this latter plane is indicated by 25. Conveniently, said angle is substantially equal to 45°, as in the case of the said representation. In the given geometrical configuration of the axes 23 and 24 of the intake valve and exhaust valve in the cylinder head according to the invention, as can be clearly seen in Figure 3, said axes are not parallel to the plane 25 containing the cylinder axes, nor are they both on the same side of it (in contrast to cylinder heads of prior type), but instead one of these axes is on one side of said plane and the other is on the opposite side of the plane.

Thus whereas the point 24 lies on the axis 9 of the camshaft 7, the other point obviusly lies at a certain distance from said axis. The exhaust valve 18 is provided with a tappet which automatically takes up slack, and can be of any suitable mechanically or hydraulically operated type, it being interposed between the stem of the valve 18 and the corresponding operating cam 8. It is axially mobile within a corresponding cylindrical seat 27 and is normally held against said cam by the action of a spiral spring 28 interposed between said tappet and a suitable disc 29. The exhaust valve 17 is kept in its closed position by the action of a spiral spring 30 interposed between a pair of discs 31, and is operated by a corresponding cam 8, not directly as in the case of the exhaust valve 18 but by way of a rocker lever 32, one end of which is substantially hinged by means of a ball joint 33 to the body 6 of the cylinder head, and the other end of which rests on the valve stem by way of a tappet 34 of suitable type. The cam 8 rests on an active surface 35 disposed between said ends. The intake and exhaust ports 19 and 20 are in communication with a corresponding intake duct 36 and a corresponding exhaust duct 37 provided in the body 6 of the cylinder head and in communication with corresponding manifolds of the engine. In said body there are also provided further holes and ducts, either for feeding a suitable fluid for operating the tappet 26 if this is of hydraulic type (hole 38), or for cooling the head or simply for lightening it.

On the cylinder head there are disposed injectors 42, which are fixed in any suitable manner into corresponding seats 43 in the cylinder head body 6, and are provided with a substantially cylindrical nozzle 44, the tip of which comprises injection holes for injecting the fuel into the cavity 4. The point of intersection of the axis 45 of each injector with that surface 46 of the body 6 of the cylinder head 5 which rests on the corresponding surface 47 of the crankcase 1 (this point being indicated by 43 in the representation of Figure 3) is positioned a small distance from the cylinder axis 11, this distance conveniently being less than one tenth of the cylinder diameter, and thus of the diameter of the circumference 10. In addition, the inclination of the axis 45 of each injector to the axis 11 of each cylinder, indicated by γ in Figure 2, is also chosen very small and is conveniently less than 25°.

The cylinder head according to the invention consequently simultaneously satisfies the two following favourable geometrical conditions, namely that the distance of the point 48 (point of intersection of the axis 48 with the surface 46) from the cylinder axis 11 is very small and the angle γ between these axes is also very small. These two favourable conditions can be obtained because of the particular geometry which has been chosen in positioning the basic geometrical elements of the cylinder head. In this respect, it can be easily seen from the figures that if the positions of the intake and exhaust valve axes 23 and 24 have been chosen in the aforesaid manner, no interference arises between these valves or the parts associated with them (in particular the automatic slack take-up tappet 26) and the corresponding injector 42, even if the axis 45 of this latter forms a very small angle γ with the axis 11 of the relative cylinder. Certain important advantages can therefore be obtained with the described cylinder head according to the invention.

Firstly, a high volumetric efficiency because of the large diameter that the intake and exhaust ports 19 and 20 can have; this favourable result derives substantially from having disposed the value axes 23 and 24 in a plane forming an angle α of between 0° and 90° with the plane containing the cylinder axes 11. Secondly, a very high thermodynamic efficiency; this derives substantially from the fact that the tip of the nozzle 44 of each injector 45 substantially coincides with the axis 11 of the relative cylinder, and the inclination (angle β) of the injector axis 45 to the cylinder axis is very small. In this respect, under these conditions the atomised fuel injected by the end of the nozzle 44 arrives substantially in the centre of the cavity 4 of the piston 3, and the injection holes provided in the tip are under the correct conditions to attain substantially perfect injection uniformity as they are more or less symmetrically arranged about the axis 45 of the relative injector and about the axis of the combustion chamber 4 formed in the piston 3.

## Claims

1. A direct injection diesel engine cylinder head (5) in which intake (17) valves and exhaust (18) valves are mobile with their axes (23, 24) parallel to the cylinder axes and which houses the fuel injectors (42), the axes of said cylinders being disposed in the plane containing the drive shaft axis, and said cylinder head being provided with a surface (46) arranged to rest on a corresponding surface (47) of the engine crankcase (3) on which said cylinder head is fixed, in said surface of the cylinder head there being provided circular intake (19) ports and circular exhaust (20) ports controlled by the relative valves, and there being also provided holes (43) through which the nozzles of said injectors project, each plane in which the axes (23, 24) of the intake (17) valve and exhaust (18) valve of each cylinder lie forming an angle of between 0° and 90° with the plane containing the cylinder axes, and each nozzle (44) of said injectors opening substantially in correspondence with the axis of the relative cylinder, the axis (45) of each injector forming an angle of less than 25° with said axis of the relative cylinder, characterised in that said valves are controlled by a single camshaft (7) the axis of which is parallel to said plane containing the cylinder axes, and the exhaust and intake valves of each cylinder are controlled the former directly by means of a tappet (26) disposed between the exhaust valve (18) and the relative cam (8) rigid with said shaft (7) and arranged to take-up the slack between the valve and cam, and the latter by means of a rocker lever (32) operated by a cam (8) rigid with said shaft.

2. A cylinder head as claimed in claim 1, characterized in that said angle is substantially 45°, and the distance of the point of intersection of said injector axis with said surface of the cylinder head which rests on said surface of the engine crankcase is less than 1/10 of the cylinder diameter.

3. A cylinder head as claimed in claim 1 or 2, characterised in that said rocker lever (32) has one end (33) hinged to said head and its other end in contact with the stem (34) of the relative valve, the operating cam (8) of said rocker lever cooperating with a surface (35) of said lever lying between said ends.

## Patentansprüche

1. Zylinderkopf (5) für Dieselmotor mit direkter Einspritzung, in dem Einlaßventile (17) und Auslaßventile (18) mit ihren Achsen (23, 24) mobil sind, parallel zu den Zylinderachsen und in dem sich die Einspritzventile (42) für den Treibstoff befinden, die Achsen des besagten Zylinders befinden sich auf der Fläche, auf der sich die Lenkwelle befindet, besagter Zylinderkopf ist mit einer Oberfläche (46) versehen, die auf einer entsprechenden Oberfläche (47) der Motorhalterung (3) montiert bleibt und auf der besagter Zylinderkopf befestigt ist, besagte Oberfläche des Zylinderkopfs ist mit kreisförmigen Einlaßöffnungen (19) und mit kreisförmigen Auslaßöffnungen (20) versehen, die von entsprechenden Ventilen kontrolliert werden, ebenso sind dort Öffnungen (43) vorgesehen durch die die Düsen der besagten Einspritzventile geführt sind, jede Fläche, auf der die Achsen (23, 24) der Einlaßventile (17) und Auslaßventile (18), eines jeden Zylinders liegen, bilden einen Winkel zwischen 0° und 90° mit der Fläche, auf der sich die Zylinderachsen befinden und jede Düse (44) der besagten Einspritzventile öffnet sich grundsätzlich in bezug auf die Achsen des entsprechenden Zylinders, die Achsen (45) eines jeden Einspritzventils bilden einen Winkel von weniger als 25° mit den besagten Achsen des entsprechenden Zylinders, dadurch gekennzeichnet, daß besagte Ventile durch eine einzelne Nockenwelle (7), deren Achse parallel zu besagter Fläche liegt, auf der sich die Zylinderachsen befinden und daß die Einlaß- und Auslaßventile eines jeden Zylinders direkt durch Nockenvorrichtungen (26) kontrolliert werden, die sich zwischen dem Auslaßventil (18) und dem entsprechenden Nocken (8) befindet, fest mit besagter Welle (7) verbunden und so montiert, daß sie die Distanz zwischen Ventil und Welle und letzterem mit Hilfe von Hebelvorrichtungen (32) aufnehmen können, die durch einen Nocken (8), der fest mit besagtem Kamm verbunden ist, bewegt werden.

2. Zylinderkopf nach Anspruch 1, dadurch gekennzeichnet, daß besagter Winkel grundsätzlich 45° beträgt und daß die Distanz des Schnittpunktes von besagter Einspritzventilachse mit besagter Oberfläche des Zylinderkopfes, die auf besagter Oberfläche der Motorhalterung verbleibt, weniger als 1/10 des Zylinderdurchmessers beträgt.

3. Zylinderkopf nach Anspruch 1 oder 2, dadurch gekennzeichnet, daß ein Ende (33) des besagten Hebels (32) in besagtem Kopf eingehängt ist und sein anderes Ende mit dem Fuß (34) des entsprechenden Ventils Kontakt hat, der arbeitende Nocken (8) des besagten Hebels arbeitet mit der Oberfläche (35) des besagten Hebels, die zwischen den besagten Enden liegt, zusammen.

## Revendications

1. Culasse (5) de moteur Diesel à injection directe dans laquelle des soupapes d'admission (17) et des soupapes d'échappement (18) sont mobiles, leurs axes (23, 25) étant parallèles aux axes des cylindres, et qui renferme les injecteurs (42) de carburant, les axes desdits cylindres étant disposés dans le plan contenant l'axe de l'arbre d'entraînement, et ladite culasse présentant une surface (46) disposée de façon à reposer sur une surface correspondante (47) du carter (3) du moteur sur lequel ladite culasse est fixée, ladite surface de la culasse présentant des lumières circulaires (19) d'admission et des lumières circulaires (20) d'échappement commandées par les soupapes associées, et des trous (43) par lesquels les buses desdits injecteurs font saillie étant également prévus, chaque plan dans lequel s'étendent les axes (23, 24) de la soupape d'admission (17) et de la soupape d'échappement (18) de chaque cylindre formant un angle compris entre 0. et 90° avec le plan contenant les axes des cylindres, et chaque buse (44) desdits injecteurs s'ouvrant sensiblement en correspondance avec l'axe du cylindre associé, l'axe (45) de chaque injecteur formant un angle de moins de 25° avec ledit axe du cylindre associé, caractérisée en ce que lesdites soupapes sont commandées par un seul arbre à cames (7) dont l'axe est parallèle audit plan contenant les axes des cylindres, et les soupapes d'échappement et d'admission de chaque cylindre sont commandées, la première directement au moyen d'un poussoir (26) disposé entre la soupape d'échappement (18) et la came associée (8) rigide avec ledit arbre (7) et dans une disposition permettant de rattraper le jeu entre la soupape et la came, et la seconde au moyen d'un culbuteur (32) actionné par une came (8) rigide avec ledit arbre.

2. Culasse selon la revendication 1, caractérisée en ce que ledit angle est sensiblement de 45°, et la distance du point d'intersection dudit axe de l'injecteur avec ladite surface de la culasse qui repose sur ladite surface du carter du moteur est inférieure à un 1/10 du diamètre du cylindre.

3. Culasse selon la revendication 1 ou 2, caractérisée en ce que ledit culbuteur (32) présente une première extrémité (33) articulée sur ladite culasse et son autre extrémité en contact avec la tige (34) de la soupape associée, la came (8) d'actionnement dudit culbuteur coopérant avec une surface (35) dudit culbuteur s'étendant entre lesdites extrémités.

Fig. 1

Fig. 2

Fig. 3